# EUROPEAN PATENT SPECIFICATION

(11) **EP 1 399 872 B1**
(45) Date of publication and mention of the grant of the patent: **07.11.2007**
(21) Application number: 02740878.0
(22) Date of filing: 31.05.2002
(51) Int. Cl.: G06K 7/06, G06K 11/06, G09B 7/06, A63F 9/18, G06K 19/067

(54) **INFORMATION SYSTEM**
INFORMATIONSSYSTEM
SYSTEME D'INFORMATION

(30) Priority: 31.05.2001 GB 0113268
(43) Date of publication of application: 24.03.2004
(73) Proprietor: Arjo Wiggins Fine Papers Limited, Chineham,Basingstoke, Hampshire RG24 8BA (GB)
(72) Inventor: HERDMAN, Peter Thomas, Buckinghamshire HP12 4PZ (GB)
(74) Representative: South, Nicholas Geoffrey
(86) International application number: PCT/GB2002/002631
(87) International publication number: WO 2002/097709

(56) References cited:
- CH-A- 512 112
- DE-A- 2 204 263
- DE-A- 2 325 548
- DE-A- 2 814 742
- FR-A- 2 597 212
- GB-A- 1 572 533
- US-A- 3 666 925
- US-A- 4 115 931

## Description

The present invention relates to a system including a substrate, such as paper, having certain electrical qualities and a reader which is sensitive to those qualities in order to determine position or other information from the substrate.

There have been many previous proposals in relation to systems for transferring information from sheet-form media, such as paper, to computers. These include optical scanning of part or complete sheets in order to read an image into a computer readable format or to process text by character recognition software. In general terms, such processes replicate the process a person would employ in processing images or text and no information is gained from the paper or other substrate itself, as distinct from the image printed thereon.

Alternatively, printed barcodes may be optically scanned to convey information, or magnetic inks or fibres may be used with appropriate readers and, possibly, writers.

Another approach which has been proposed is to give a paper substrate on which an image or text is printed some characteristics which may be sensed by a reading device. In the context of machine readable media, GB-A-1572533 discloses a system in which an ink deposit is applied to a recording substrate, such as paper, in which the ink deposit has an electrical conductivity measurably different (higher or lower) from that of the substrate. This is read by a corona generator which is sensitive to differences in the electrostatic scatter caused by the differences in the electrical conductivity in order to detect the pattern.

In the context of paper based products suitable for personal use, it has been proposed to provide a paper substrate having printed thereon a pattern in conductive invisible ink. The pattern may be read by a reading device, which may be held in the same manner as a pen, being moved across a page. The pattern is arranged such that it is different across the page (for instance as a bar-code pattern) so that for instance a computer or cellular telephone with which the reader is in communication can determine its position on the page from sensing the ink pattern. The computer may then combine that information with knowledge as to what image or text is printed where on the paper in order to interpret the user's intention.

A reader for such an arrangement would, as mentioned, take the general form of a pen, but instead of an inked nib, would be provided with two or more electrodes. As the reader is moved across the page, the conductive ink pattern makes connection between the pair or pairs of electrodes, which connections are sensed by suitable circuitry for interpretation of the conductive ink pattern.

There are a number of difficulties in implementation of this type of arrangement. Firstly, the construction of the reader "pen" is complex, requiring as it does the provision of two or more robust, closely spaced electrodes insulated from each other together with a power source and associated circuitry for detecting a closed circuit between electrodes.

Additionally, the production of an invisible conductive ink presents problems. In particular, conventional conductive inks based on conductive substances such as carbon, silver, copper or nickel, or blends of silver with other elements such as palladium or carbon, which typically would be introduced into ink to provide conductivity, tend to render the ink visible. Reducing the amounts of conductive substances in the ink to effectively invisible levels makes the ink harder to sense with the reader. Less visually obtrusive conductive materials have also been proposed for use in conductive inks, for example indium tin oxide (ITO), silver oxide, and conductive polymers such as polyethylene dioxythiophene (PEDOT) and polyphenylene, but these are expensive.

US 4,115,931 discloses an electronic matching game using cards, in which a plurality of electrical contacts correspond to questions, and a plurality of contacts correspond to possible answers. The user touches a contact corresponding to a particular question with one hand, and selects an answer by touching the appropriate contact with an electronic stylus, using the other hand. Conductive paths are arranged between each question and the corresponding correct answer, such that a low voltage current flows through the human body of the user when the correct answer is selected, allowing the stylus to give a visual indication, e.g. by lighting an LED, when the answer is correct.

DE 2 204 263 discloses a device for evaluating paper forms with punched holes, by electrically detecting the holes in the paper, which is put on a board with electrodes at locations where the holes may be. A hand-held sensor pen is used as a probe for marking the holes.

DE 2 325 548 discloses a punch card reader, using a hand-held pen for reading a card having codes programmed in an arbitrary order. US 3,666,925, against which claim 1 is delimited, discloses a code tape with conductive material on an insulating surface, and the use of brush contacts for reading the tape.

The present invention provides an information system as set out in claim 1.

This arrangement is in complete contrast to the previously proposed arrangement for personal use described above in which each portion of the conductive ink pattern is an isolated island of conductive material. This has significant implications for the type of reader which may be used in conjunction with the substrate.

Although the above outlined pattern may be formed by printing the conductive pattern on an insulating substrate or in register with a printed insulating pattern, in a particularly preferred form of the invention, the substrate is formed having a conductive surface upon which an insulating pattern representative of said information is provided.

The conductive surface may be provided either by providing a conductive layer on the surface of an otherwise non-conductive substrate, or by providing a substrate which is suitably conductive through its entire thickness. The insulating pattern provided on the conductive surface may be applied by a printing or similar process using insulating ink or it may be provided as part of the substrate manufacturing process itself.

A further advantage of the invention is that it is generally easier to form a conductive layer reliably and with sufficient coatweight proper conductivity than it is to print an ink pattern with proper conductivity.

In some applications of the invention the insulating pattern is unobtrusive so as not to visually interfere with an image printed on the substrate.

In its presently preferred form this aspect of the invention is implemented in paper based sheet form. There is no limitation on the grammage of the paper used, and it will be understood that the term "paper" used in this specification embraces heavier weight papers of the kind more usually referred to as "boards". However the invention is also applicable to substrates of other materials, such as plastics. These include so-called "synthetic papers", i.e. plastics sheet materials manufactured so as to simulate the printability, stiffness, handling and other characteristics of natural cellulosic paper, and printable polypropylene sheet materials of the kind specially produced for graphic arts and related packaging and stationery applications. Synthetic papers are available under the trade mark "Polyart" from Arjobex Limited, Clacton-on-Sea, United Kingdom. Printable polypropylene sheet materials as referred to above are available under the trademark "Priplak" from Usiplast S.A., Neuilly en Thelle, France. They may be transparent, translucent or opaque, with a variety of surface textures. Also the substrate mentioned above may not be of sheet form, but may for instance be any surface of an article, such as packaging, clothing or a container.

As will be appreciated, in use, as the sensing device is moved across the surface described above, a conductive path between the electrodes will be completed by the conductive surface when the first electrode is in contact with that surface, while there will be no such conductive path when the first electrode is in contact with a portion of the insulating pattern. A signal representing the making and breaking of that conductive path output from said circuit means can be interpreted by a computer as representative of the insulating pattern on the surface.

Conveniently the sensing device has the general physical form of a pen with the first electrode being provided in the form of a nib portion such that the device may be moved across the surface in a "writing" motion. As the nib portion in this arrangement is only a single electrode, it is significantly easier to construct a robust practical device as compared to the multiple electrode nib arrangements outlined above. The nib may be spring loaded and arranged, for instance, to retract into an insulating sheath of a larger diameter. This helps to reduce the pressure and abrasion applied to the substrate during use.

The second electrode may be arranged to be connected to the conductive surface in any convenient manner. For instance an electric wire in electrical connection with the second electrode may extend from, for instance, the top of the reader device. In use the wire would be placed or fixed in electrical contact with a portion of the conductive surface in order to perform the detection.

While such an arrangement would be possible, it may be considered somewhat impractical to have a wire trailing from the reader device while it is being used.

Accordingly the invention provides, in a particularly preferred embodiment, a sensing device as outlined above formed so as to be held by a user in use with the second electrode formed on the exterior of the device so as to be contacted by a user when held in use. In operation, this arrangement relies on the user of the sensing device also contacting the conductive surface and the electrical contact between the second electrode and the conductive surface is therefore made through the user. The electrical resistance of the human body is sufficiently low that the electrical circuit means formed as part of the sensing device can reliably distinguish between an open circuit condition, when the first electrode is not touching the substrate or is touching the insulating pattern, and a conductive condition with the circuit between the electrodes completed by a portion of the user's body.

Conveniently, as mentioned above, the device has the form of a pen so as to be used with a writing type motion on the substrate. In this case, the required contact between the user and the conductive surface is easily achieved as, when performing a writing motion, a user will either naturally rest a portion of his or her writing hand on the surface or will hold the substrate with his or her other hand. Either of these provides a sufficiently conductive path for proper operation of this embodiment.

In an alternative embodiment, a paper product made according to the invention may be read by a reader device through which the product is passed, eg via a slot either by hand or a transport mechanism. The reader device comprises a first electrode arranged to pass over the surface of the paper product as it is passed through the device and a second electrode to make contact with the conductive substrate. This may, for instance, be in the form of a brush, or may be part of a roller forming part of the transport mechanism.

A signal output from the electrical circuitry formed as part of the sensing device may be communicated to a computer or other suitable device, such as a cellular telephone, for processing in generally the same manner as in the systems outlined above. The communication may be by way of a wired connection. In particular the connection may be made to a soundcard device commonly found in computers, with the advantage that such a connection may be easily made via a simple jack-plug connector. At least the primary processing of the reader signal may then be performed by the sound signal processing capabilities built in to the computer.

Alternatively, the sensing device may be connected to an interface on the computer or other device from which power may be derived, such as a USB or firewire connector. This would obviate the need for an independent power supply in the sensing device.

A wired connection as above may again however prove unwieldy. A further alternative arrangement is therefore to include within the sensing device a transmitter to enable wireless communication of the detection signal using a suitable communication scheme, such as infra-red signalling, acoustic signalling or a radio signal protocol such as Bluetooth. The receiver of the signals may be built in to the destination device, or may be provided with suitable connectors again to input to the device, eg via a soundcard.

Also, the sensing device may be provided with a visual indicator of a closed circuit between the electrodes, which would flash as the detector is moved across the surface thereby giving a simple and immediate indication of the proper functioning of the device.

It will be appreciated from the above that one preferred implementation of the reader or sensing device is a generally pen shaped item which has no requirement for a physical connection to anything else. It is arranged to communicate wirelessly with a related processing device, and relies on a user to make the required connection with the conductive surface. Additionally it can be of simple robust design, requiring only two simple external electrode formations.

In combination then the present invention provides a simple and robust system, preferably paper based, for storing information in a form which may be substantially invisible to the human eye but which can be sensed by a reader device in a form suitable for transfer to and interpretation by a computing or other processing device.

The information provided by the paper or other substrate may take any of a number of forms. For instance, as referred to above, the information may be information as to position on the surface of the substrate. This may be correlated with information previously stored as to the positions of various visible printed portions on the surface. For instance a selection of items from a printed list may be made simply by passing the reader over the desired items. The detected reader position on the surface is correlated with information as to what items are printed where to interpret the item selection.

Alternatively, or in addition, the insulating pattern may carry information itself, such as a hidden code or security key which may be required to be input to a device to enable it to perform some function. For instance a computer game may rely on the input of a particular code for a particular level or mode of operation, and such codes may be provided or sold as a product, for instance paper, with the invisible code on. There are also various payment schemes for services such as electricity supply which might incorporate the provision of a key utilising the present invention. The invention could also be implemented as an alternative to the numeric or written completion of a preprinted form, or in the context of collectable cards to provide a means to input details of a particular card to a computer or other device.

In these or other instances, the appearance of the reader device may be made to correspond to the subject of the specific use. For instance, it may be made in the form of a character associated with a computer game or collectable cards, or in the form of a specific item such as a magic wand if the game or cards have a specific "magic" theme.

It should be appreciated that, throughout this document, the terms 'conductive' and 'insulating' are relative terms and are used as short hand to denote a measurable difference in conductivity between areas of higher conductivity (conductive areas) and areas of lower conductivity (insulating areas). It is not intended that the use of these terms should, unless specifically stated, imply conductivities higher or lower than any particular values.

It will be appreciated from the above discussion that the present invention provides many advantages over previous arrangements. In order that the present invention be more fully understood, preferred embodiments thereof will be described in the following by way of example with reference to the accompanying drawings, in which:
Figure 1a illustrates the operation of a previously known arrangement;
Figure 1b illustrates the operation of an embodiment of the present invention;
Figure 2 illustrates one form of reader device in this invention;
Figures 3, 4, 5 and 6 illustrate alternative forms of reader device in this invention;
Figure 7 illustrates a suitable configuration of a computer for use within the invention; and
Figure 8 illustrates a collectible card made according to the invention.

The preferred embodiment of the invention will be described in the following as a system comprising a paper substrate, which may be formed into any number of paper products, on which non human-readable information is provided and a simple to use reader device which can be used to read the information from the paper. The paper substrate has a conductive surface, on which a insulating pattern is provided. The reader is arranged to be moved across the paper in a writing type motion, during which it senses the conductive surface and insulating pattern in order to detect the information.

While the preferred embodiment utilizes a paper substrate, as mentioned above, this is by way of example, and other substrates fall within the invention.

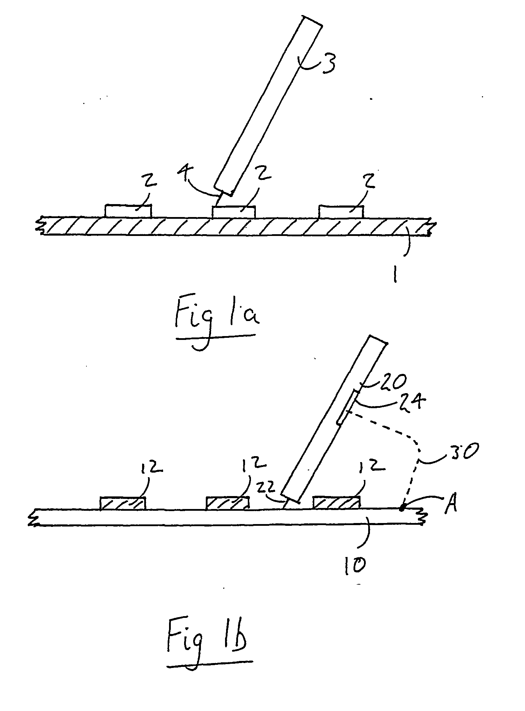

Figures 1a and 1b illustrate the essential difference between the substrate of the present invention and that proposed previously. Figure 1a, which illustrates the previous proposal, shows in cross section a paper substrate 1 having an ink pattern 2 printed thereon. It will be appreciated that this figure is not drawn to scale, in order to show the described features clearly. Paper substrate 1 is an insulator and ink 2 is conductive. A reader 3 is provided having a tip portion 4 which is moved across the surface of the paper substrate and is arranged to detect whether the tip is in contact with conductive ink 2 or insulating paper 1. In order to do this, tip portion 4 in fact comprises at least two electrodes insulated from each other whereby an electrical path between them is closed when the tip is in contact with conductive ink 2 but not otherwise. Reader 3 also incorporates circuitry arranged to detect such a closure of an electrical path between the electrodes.

The need for a plurality of closely spaced electrodes in tip portion 4 will be apparent from an appreciation that each portion of conductive ink 2 may be an entirely isolated island of conductivity, and so the only way to close a circuit between electrodes of reader 3 is for two or more of those electrodes to be simultaneously in contact with the same portion of ink 2. This provides considerable difficulties in the construction of reader 3, and especially tip portion 4.

Figure 1b correspondingly illustrates the principles of the present invention, and shows, again in cross-section and not to scale, a substrate 10, in this case paper, having an ink pattern 12 printed thereon. In this case, ink 12 is an insulator, while at least the upper surface of paper substrate 10 is conductive. The paper or other substrate may be made conductive by the inclusion in its manufacture of conductive chemicals such as quaternary ammonium salts, metal salts and synthetic hectorite clays or similar synthetic silicate materials, such as that sold under the registered trademark `Laponite'. Alternatively, the paper may be made conductive by the use of conductive materials such as previously proposed for use in conductive inks, as referred to earlier. Further information on such materials is available in a book entitled "Polymer Thick Film" by Ken Gilleo, published by Van Nostrand Reinhold in 1996 (pages 27 to 34, Section 2.3 entitled "Conductors").

Insulating inks are well known. Many such inks are also clear and so may be used to render the insulating pattern at least unobtrusive if not invisible to the eye. Alternatively, the colour of the ink may be chosen to match or approach the colour of the substrate, to achieve the same effect.

In Figure 1b a reader 20 having a tip portion 22 is provided which is moved across the surface of paper substrate 10 and again it is desired to determine whether, at any given time, tip 22 is in contact with the conductive surface of paper substrate 10 or with insulating ink 12.

A significant difference over the arrangement of Figure la is that, in Figure 1b, all of the conductive portions which appear between the insulating ink portions are in electrical connection with each other, as they are all part of the conductive surface of paper substrate 10. In particular this simplifies the requirements for the design of tip 22 of reader 20 as compared with tip 4 of reader 3 in Figure la.

Tip 22 of reader 20 comprises only a single electrode, and reader 20 incorporates circuitry arranged to detect closure of an electrical circuit between electrode 22 and a second electrode 24 which may be provided in any suitable location in or on reader 24 and is shown by way of example as being on the side of the reader. In operation an electrical connection 30 is made between electrode 24 and the surface of paper substrate 10, for instance at point A, while the tip electrode 22 is moved across the surface of the paper. Because of the electrical continuity between all of the exposed portions of the paper surface, contact of electrode 22 with any such portion closes an electric circuit between electrodes 22 and 24 by way of the point of contact of tip 22, the paper substrate 10, point A and connection 30. The connection point A can stay fixed throughout the movement of the tip 22 across the paper, or may also move.

Connection 30, shown schematically in Figure 1b as a dotted line, may be established in any convenient manner. The presently preferred arrangement is for connection 30 to be established via the body of the user of reader 20. Reader 20 is designed to be hand held by a user, in the manner of a pen, such that the user's hand is in physical contact with electrode 24 on the external surface of reader 20. Connection to point A on the surface of paper substrate 10 may then by made by any other portion of the user's skin with the paper. For instance, when writing it is quite usual for a finger, the wrist or other portion of the writing hand to be in contact with the sheet of paper being written on. Alternatively, typically if the paper product is too small for such a situation, it may held by the non-writing hand. Either of these establishes a sufficient connection 30 for proper operation of the invention.

Another arrangement considered to fall within the ambit of the present invention, would be to provide a flexible cable, one end of which being attached to electrode 24 and the other end being fixed or held, perhaps by taping, to point A, in order to establish connection 30. This is a less elegant arrangement than that described above, but may be a useful implementation of the invention in certain situations, for instance where users may be wearing gloves.

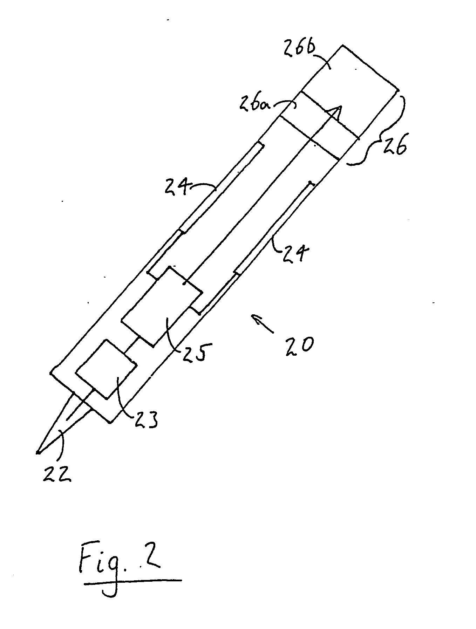

Figure 2 is a schematic cross-sectional/block diagram of one possible implementation of reader 20. As mentioned above, reader 20 comprises a tip electrode 22 and a second electrode 24. In this embodiment, electrode 24 is provided in two areas on the side of the reader so as to ensure contact with a user's hand however it is being held. An alternative would be to shape the exterior of the reader 20 so that comfortable holding is possible in only one orientation and positioning the electrode 24 accordingly. Or the electrode 24 could be formed so as to encircle reader 20.

Additionally, the reader 20 comprises an impedance measuring means 25 and an associated power source 23 sufficient to provide a small current for operation of the measuring means 25. In Figure 2, the electrodes 22, 24, power source 23 and measuring means 25 are illustrated as connected together in series. In this arrangement, measuring means 25 may be a simple threshold circuit arranged to indicate when the current passing in the series loop reaches a predetermined level. Any other suitable means for detecting when an electrical connection is closed between electrodes 22, 24 may be incorporated in reader 20 within the scope of this invention.

Measuring means 25 is arranged to provide a signal to output means 26 to indicate the presence or absence of an electrical connection between electrodes 22, 24. Output means may comprise a visible indicator 26a to give a visible indication of the proper operation of reader 20, and a transmitter portion 26b for transmitting the output signal to a suitable receiver for subsequent processing.

Figure 3 illustrates the construction of an alternative embodiment of the reader ('pen') device 30 within this invention. In Figure 3, the same reference numerals are used as in Figure 2 to designate corresponding parts. In this embodiment, the tip electrode 22 is formed as a round ended plated contact of 1mm diameter. It is spring loaded to a maximum of 0.1N so as to minimise damage to the substrate and any associated lacquer or varnish across which it is passed. The second electrode 24 is provided by the body of the reader 30 being formed of an aluminium tube. In use therefore the operator's hand comes into contact with the outer surface of the reader (and therefore electrode 24) and completes the electric circuit with the conductive substrate and the tip electrode 22 as described above.

Power source 23 (not shown separately in Figure 3) is arranged to apply a 6 volt potential across the electrodes 22, 24. In this embodiment, measuring means 25 comprises a pre-amplifier 31 and a voltage controlled oscillator (VCO) 32. The high input impedance pre-amplifier 31 is arranged to give a current gain of x50 to provide the input to the VCO 32. The input value to the VCO alters according to whether or not the electrode 22 is in contact with a conductive portion of the substrate, and therefore according to whether or not there is a circuit formed between the two electrodes. As the input to the VCO 32 alters, so will the frequency of its output signal, and this change in frequency is used to detect the movement of electrode 22 into or out of contact with a conductive portion of the substrate.

In one particular embodiment, the circuit values of the VCO 32 are selected such that the output has a frequency of 11 kHz when the electrode 22 is in contact with a conductive portion of the substrate, and 4 kHz when it is not.

In this embodiment, the signal from the VCO 32 is shown by way of example as being output via a lead 35 (for instance a small diameter co-axial cable, 0.5m in length) terminating in a plug 36. This plug may be placed into the microphone socket on a PC or other computer, such that the input signal may be analysed by the computer.

Figure 7 illustrates schematically a suitable computer configuration for receiving and processing the signal from the reader. In this Figure, computer 70 comprises a CPU 72 (which, together with other standard components of a computer such as memory means 76, power supply, etc performs the fundamental operations of the computer) and an interface 73. In an arrangement suitable for use with a reader as described above, the soundcard of the computer is used as a suitable interface, but other alternative interfaces with the computer may be used. In Figure 7, the soundcard interface 73 includes a socket 74 suitable receiving plug 36 of Figure 3. Computer 70 is configured to receive and analyse the output from the reader via socket 74 of interface 73, and further includes a display means 75 (which may for instance be a monitor or projection apparatus) upon which it may display the result of the analysis. Alternatively, or in addition, the computer may store such results in memory means 76 or transmit the results via an interface 77. Computer 70 may also include program means configured to cause the computer to perform specific actions according to the information read by the reader device.

In analysing the input signal, computer 70, or other signal processing device, typically uses predetermined information about the pattern it is expecting to read in order to determine the information. By way of example, in the following, the steps which may be taken when the reader is being used to read a bar code representing a particular URL and which is set out as conductive and insulating stripes will be described. In this case, it is known that the bar code to be detected has a standard start sequence, and also that the coding employed (Manchester encoding) results in each of the bar widths being either one or two units. The analysis can use these, and/or other known parameters of the code being read, to detect factors such as the speed of swipe across the code and to determine whether a complete code has been read.

In this context, a specific program has been tested by the present applicant which functions to analyse the output from a reader as described above input to the sound card of a PC, and which performs the following steps:
1. Blocks of data from the sound card are sampled.
2. The mean zero value is determined and zero crossing points are identified.
3. Zero crossings which occur too rapidly are discarded as noise, based upon the knowledge that the signal will, in this example, be at either 4 or 11 kHz.
4. Short segments of zero crossing lists are examined to determine whether the signal is high or low frequency indicating contact with conductive material, or no such contact.
5. These short segments are chosen using a sliding window in order to determine the conductivity at a frequency of 1 kHz.
6. If a period longer than a predetermined threshold passes without a change in conductivity, the reading process is indicated as being complete.
7. The sequence of high and low frequency periods is stored as a time based series of binary data, with '0' representing low frequency (poor conductivity) and '1' representing high frequency (good conductivity).
8. The start sequence is located in the binary sequence (if no start sequence can be detected then no valid reading is obtained) and used to determine the speed of movement of the reader.
9. The speed of movement of the reader is used to establish the widths of the subsequent bars making up the code and determine a possible bar pattern. In the case of a Manchester encoded sequence, the knowledge that each bar must be either one or two units wide can be used as part of this step.
10. Additional possible sequences are determined from the data to account for the possibility that, depending on the particular inks or lacquers and substrate used, the insulating lacquer or ink may spread between printing and drying. Using the assumptions that the insulating stripes are 10%, 20%, 30%, 40% and 50% wider than the conductive stripes, steps 5 - 9 are repeated to determine such additional sequences.
11. Any possible patterns having more than the maximum permitted number of bars are rejected.
12. Any possible patterns having fewer than the minimum permitted number of bars are rejected.
13. The patterns are compared with known possible patterns, and the best match or matches is (are) retained.
14. On the basis of the determined match, the corresponding URL page is retrieved and displayed by the computer, either on its own display, or possibly using an external projection monitor.

It will be appreciated that this is simply an example, and the invention may be used in conjunction with bar codes representing other data than URLs, or with other patterns than bar codes.

Further by way of example, the invention will now be illustrated by the following exemplary formulation of a suitable substrate for use with the reader described above.

18 kg of a proprietary conductive film-forming synthetic silicate material ("Laponite" JS, supplied by Rockwood Additives Limited, Widnes, UK) was dispersed with stirring in 82 kg water, and 3.6 kg of 50% solids content ethylene-vinyl acetate copolymer latex binder were added. The resulting mixture was air-knife coated on to a conventional 330 g m⁻² playing card base stock to give a dry coatweight of ca. 1.3 g m⁻². The conductive coated product thus produced was guillotined into SRA2 size sheets and later four-colour printed on an offset litho press to produce arrays of playing card blanks. Portions of the printed sheets were then screen-printed with a transparent insulating bar code pattern so as to provide one bar code per card when the sheets were later cut to produce individual playing cards. The bar code embodied information specific to the playing card on which it was printed. The transparent insulating material used to produce the bar code pattern was a standard UV-curable printing varnish supplied by Valspar, Toumus, France.

A reader device in the form of a pen as described above in relation to Figure 3 and associated computer processing equipment was then used to test the cards produced. The processing equipment was linked to a computer which in turn was linked to a projection monitor such that information "read" by the pen would be projected on to a screen. When the pen was swept across the bar code, with the pen holder's other hand holding the card to complete the circuit, information about the playing card was successfully "read" and projected on to the screen.

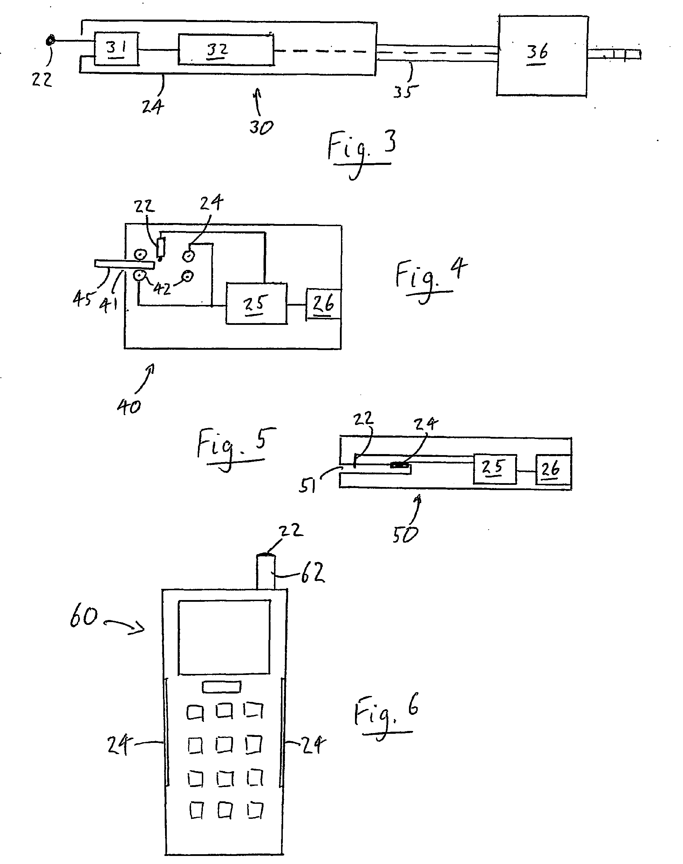

Figures 4 and 5. are schematic views of alternative sensing devices which may be used within the present invention.

Figure 4 shows in schematic sectional view a reader 40 which comprises measuring means 25 and output means 26 which correspond to like numbered parts in Figure 2 and may operate in the same or similar fashion. Reader 40 also comprises a slot 41 through which a card 45 being an information carrying substrate as described above may be inserted into the reader, and a transport mechanism which receives the card. The transport mechanism is shown representatively as a plurality of rollers 42 which act to guide the inserted card along a particular path. The reader comprises a first electrode 22 which is arranged such that it comes into contact with the surface of an inserted card and traces a known path across that surface during movement of the card. Second electrode 24 is provided by the surface of one or more of rollers 42 which contact the conductive areas of the card surface upon insertion into the reader. First and second electrodes 22 and 24 are connected as described above to measuring means 25 and the signals are processed as described above.

While Figure 4 shows only one first electrode 22, there may be provided a plurality of first electrodes each arrange to read a particular path across an inserted card. Further, one or more electrodes may be positioned to read the other face of an inserted card from that illustrated in Figure 4.

Figure 5 shows in schematic sectional view a hand held card reader 50 within this invention. Again, the reader comprises measuring means 25 and output means 26 which function as described above. Reader 50 includes a slot 51 through which at least a portion of a substrate can be passed. The reader comprises at least one first electrode 22 positioned to trace a path across a surface of the swiped substrate, and second electrode means 24 arranged to contact the conductive areas of the substrate. The second electrode may conveniently be provided in the form of a brush which passes over the surface of the substrate.

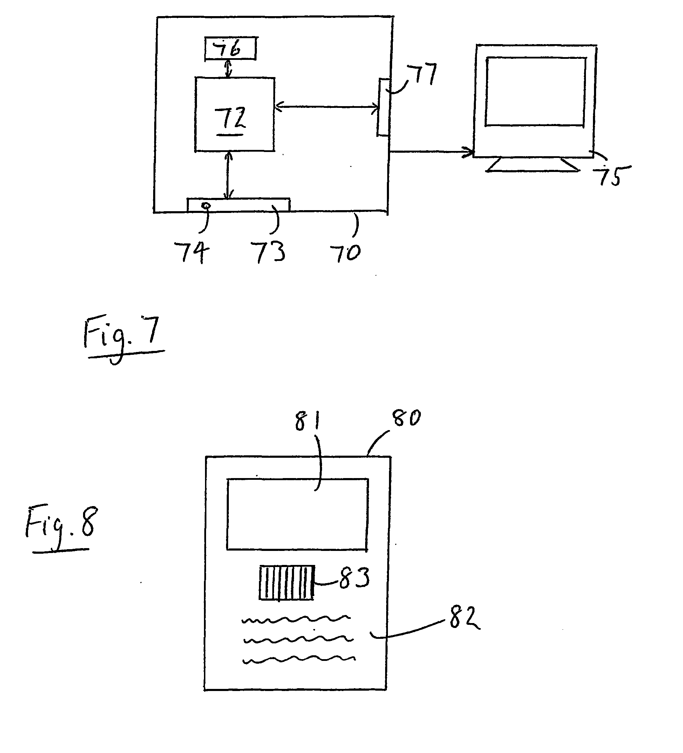

Figure 6 illustrates a further embodiment of the reader device within the present invention. Essentially, this embodiment provides the incorporation of a reader as shown in Figures 2 and 3 into a mobile telephone apparatus 60, and the basic operation of the reader is as described above. Preferably in this embodiment, the first electrode 22 is provided at the tip of the antenna portion 62 of the telephone 60. Second electrode means 24 may be provided as portions of the external casing of the telephone. The incorporation of the reader within a mobile telephone provides particular advantages in that the reader can directly use the communication facilities of the telephone to output its data, or to access specific information dependant upon what is read. For instance, the information read may include a telephone number for storage in the telephone memory, ingredient information on specially labelled products may be available to users such as diabetics, coeliacs or those with nut allergies may be available by dialling a designated site or number, or up to date information on other products or services such as foods or pharmaceuticals may be accessed either as visual or audio data using the information read into the device.

Figure 8 illustrates schematically one possible implementation of a product using the information carrying substrate used within the system of this invention. This embodiment comprises a card 80 which may be manufactured according to the Example given above, and may have any printed design applied to it for instance including a picture area 81 and/or a text area 82. The card also has an information area 83 which is shown by way of illustration as a bar code region. Within this invention, the surface of card 80 is generally conductive, and the ink with which the bar code 83 is printed is insulating. The insulating ink may not be immediately visible, but there may be visual instructions to guide a user as to where the reader should be passed. In this case, it should be appreciated that one of both of the image area 81 and text area 82 may overlap with the information area 83.

In this embodiment, it is suggested that cards 80 may be marketed as a collectible series of cards relating to a particular theme, for instance they may be collectible sporting cards, or may be related to a particular film. There would also be made available suitable readers to enable collectors of the cards to input information from the card into a computer. The computer may contain program means to cause it to perform suitable actions in response to the input information. By way of non-limiting example the computer may be programmed to perform one or more of the following:
- add details of the particular card to a database of collected cards;
- communicate that the card has been collected by the user in question to a central location, for instance via the Internet;
- retrieve, for instance for the Internet, additional images and/or information related to the subject of the particular card;
- display additional images and/or information related to the subject of the particular card.

The additional images may be moving images corresponding to the still image on the card. In the example of collectible cards with a sporting theme, the moving images may show a particular player shown on the card in action. In the example of collectible cards related to a particular film, the moving images may be sequences from the film, or additional visual sequences. It is also the case that specific readers would be made available having an appearance related to the subject of the cards. For instance in the case of a film with a magic theme, readers having the form of magic wands may be made available.

It will be appreciated that many further variations can be made within the scope of the present invention. For instance, the insulating pattern on the surface of the paper substrate is described above as being a printed pattern applied after the manufacture of the paper substrate, while it may be that the insulating pattern is formed on the surface of the paper substrate during its manufacture. Also, while some possible uses of the invention are outlined above, the invention may be implemented in any situation where it is desired to read information from paper into a computer readable form.

The invention is defined by the following claims.

## Claims

1. An information system comprising a substrate (10) having a surface upon which is provided a pattern of conductive and insulating areas, the system further comprising a sensing device (20), wherein
the sensing device comprises a first electrode means (22) having a portion arranged to be moved across the surface of the substrate, a second electrode means (24) arranged to be disposed, in use, in electrical contact with at least one of the conductive areas, and electrical circuit means (25) arranged to detect the presence or absence of a conductive path (30) between the first and second electrode means,
the pattern being arranged such that the detected absences and presences of said conductive path, in response to a movement of said first electrode means (22) across the surface while in contact with the pattern, correspond to said pattern and are readable, in use, by a signal processing device to enable the signal processing device to interpret the pattern,
**characterised in that** the substrate (10) is a base sheet with a conductive surface upon which is provided an insulating pattern (12) to form said pattern of conductive and insulating areas, the insulating pattern being formed by an insulator which is substantially invisible to the eye of a user.

2. An information system according to claim 1, wherein the insulator is an ink which is clear or of a colour matching the colour of the substrate.

3. An information system according to claim 1 or 2, wherein the pattern of conductive and insulating areas represents coded information which is interpretable, in use, by a signal processing device.

4. A system according to claim 1, 2 or 3, wherein said conductive surface comprises conductive synthetic silicate and a binder.

5. A system according to any preceding claim, in which said insulating pattern (12) is sufficiently unobtrusive so as not to visually interfere with a visible image (81, 82) provided under the insulating pattern of said substrate (10).

6. A system according to claim 5, wherein said insulating pattern (12) is formed from a printing varnish.

7. A system according to any preceding claim in which the base sheet of said substrate (10) is paper or board based.

8. A system according to any of claims 1 to 6 in which the base sheet of said substrate (10) is a synthetic paper or a printable polypropylene or other plastics sheet material.

9. A system according to any preceding claim in which the substrate (10) is conductive through the entire thickness of the base sheet.

10. A system according to any preceding claim in which said conductive surface is provided by a conductive layer formed on a non-conductive base sheet.

11. A system according to any preceding claim, in which said substrate (10) is a playing card.

12. A system according to any of claims 1 to 11 in which said insulating pattern is formed during the manufacture of the substrate (10).

13. A system according to any of claims 1 to 11 in which said insulating pattern is applied to said substrate (10) after manufacture.

14. A system according to any of claims 1 to 13 in which said sensing device (20) is formed so that it may be held, in use, as a pen and said first electrode means (22) is provided in the form of a nib.

15. A system according to any of claims 1 to 14 in which said second electrode means (24) comprises a formation on the exterior of the sensing device (20) so as to be in contact, in use, with a user, said electrical contact (30) with at least one of the conductive areas being made via the user.

16. A system according to an of claims 1 to 14 in which said second electrode means (24) comprises a flexible cable which may be placed or fixed, in use, in electrical contact with at least one of said conductive areas.

17. A system according to any of claims 1 to 16 in which said sensing device (20) comprises an audible or visual indicator (26a) arranged to give different auditory or visual indications according to the absence of presence of said conductive path (30).

18. A system according to any of claims 1 to 13 in which said sensing device (20) comprises a reader device (40; 50) through which the substrate is passed.

19. A system according to claim 18 in which said first electrode means (22) is arranged to pass over the surface of the substrate (10) as it is passed through the device and said second electrode (24) makes contact with at least one of said conductive areas.

20. A system according to claim 19 wherein said second electrode means (24) comprises a brush, or part of a roller (42) forming part of a transport mechanism arranged to transport said substrate (10) through the device.

21. A system according to any of claims 1 to 20, further comprising a signal processing device in communication with said sensing device (20) and arranged to receive an output signal from said electrical circuit means (25) representative of said detected presences and absences.

22. A system according to claim 21 in which said communication is by way of a wireless link.

23. A system according to claim 22, in which said wireless link comprises at least one of an infra-red link, acoustic signalling link or electromagnetic wave link.

24. A system according to claim 21, 22 or 23, in which said signal processing device is a computer (70) having a sound processing device (73) and an associated audio signal connector part (74), and in which said output signal is input into said computer via said audio signal connector part.

25. A system according to claim 21, 22, 23 or 24, in which said pattern of conductive and insulating areas represents position on the substrate (10) and said output signal is processed by said signal processing device to establish the position of the sensing device (20) on the substrate.

26. A system according to claim 21, 22, 23 or 24, in which said pattern of conductive and insulating areas represents coded information and said output signal is processed by said signal processing device to read said coded information.

27. A system according to claim 21, 22, 23 or 24, in which said signal processing device is a computer (70) arranged to operate in different modes upon entry of different keys, and in which said keys may be obtained by a user in the form of items (80) comprised of said substrate on which said insulating pattern represents one or more of said keys which may be entered to said computer by use of said sensing device (20).

28. A system according to any of claims 21 to 26 in which said signal processing device comprises a computer (70) or a cellular telephone (60).

## Patentansprüche

1. Informationssystem, umfassend ein Substrat (10) mit einer Oberfläche, auf der ein Muster aus leitenden und isolierenden Flächen bereitgestellt wird, wobei das System ferner einen Sensor (20), umfasst, wobei
der Sensor eine erste Elektrodenvorrichtung (22) mit einem Teil, der so angeordnet ist, dass er über die Oberfläche des Substrats bewegt werden kann, eine zweite Elektrodenvorrichtung (24), die so angeordnet ist, dass sie, während der Verwendung, in elektrischem Kontakt mit wenigstens einer der leitenden Flächen angeordnet werden kann, und einer Vorrichtung eines elektrischen Stromkreises (25), die so angeordnet sind, dass sie die Anwesenheit oder Abwesenheit einer Leiterbahn (30) zwischen der ersten und der zweiten Elektrodenvorrichtung erfassen, umfasst,
wobei das Muster so angeordnet ist, dass die erfassten Anwesenheiten und Abwesenheiten der Leiterbahn als Reaktion auf eine Bewegung der ersten Elektrodenvorrichtung (22) über die Oberfläche während des Kontakts mit dem Muster dem Muster entsprechen und während der Verwendung von einer Signalverarbeitungsvorrichtung ausgelesen werden können, um der Signalverarbeitungsvorrichtung das Interpretieren des Musters zu ermöglichen,
**dadurch gekennzeichnet, dass** das Substrat (10) ein Basisblatt mit einer leitenden Oberfläche ist, auf der ein isolierendes Muster (12) zum Ausbilden des Musters aus leitenden und isolierenden Flächen bereitgestellt wird, wobei das isolierende Muster von einem Isolator gebildet wird, der im Wesentlichen für das Auge eines Benutzer unsichtbar ist.

2. Informationssystem nach Anspruch 1, wobei der Isolator Tinte ist, die durchsichtig ist oder eine Farbe aufweist, die an die Farbe des Substrats angepasst ist.

3. Informationssystem nach Anspruch 1 oder 2, wobei das Muster aus leitenden und isolierenden Flächen codierte Informationen darstellt, die während der Verwendung von einer Signalverarbeitungsvorrichtung interpretiert werden können.

4. System nach Anspruch 1, 2 oder 3, wobei die teilende Oberfläche ein leitendes, synthetisches Silikat und ein Bindemittel umfasst.

5. System nach einem der vorhergehenden Ansprüche, in dem das isolierende Muster (12) ausreichend unauffällig ist, dass es nicht ein sichtbares Bild (81, 82) stört, das unter dem isolierenden Muster des Substrats (10) bereitgestellt wird.

6. System nach Anspruch 5, wobei das isolierende Muster (12) aus einem Drucklack gebildet ist.

7. System nach einem der vorhergehenden Ansprüche, in dem das Basisblatt des Substrats (10) auf Papier oder Pappe basiert.

8. System nach einem der Ansprüche 1 bis 6, in dem das Basisblatt des Substrats (10) ein synthetisches Papier oder ein bedruckbares Polypropylen oder ein Blattmaterial aus einem anderen Kunststoff ist.

9. System nach einem der vorhergehenden Ansprüche, in dem das Substrat (10) über die gesamte Dicke des Basisblatts hindurch leitend ist.

10. System nach einem der vorhergehenden Ansprüche, in dem die leitende Oberfläche von einer leitenden Schicht, die auf einem nicht-leitenden Basisblatt gebildet ist, bereitgestellt wird.

11. System nach einem der vorhergehenden Ansprüche, in dem das Substrat (10) eine Spielkarte ist.

12. System nach einem der Ansprüche 1 bis 11, in dem das isolierende Muster während der Herstellung des Substrats (10) gebildet wird.

13. System nach einem der Ansprüche 1 bis 11, in dem das isolierende Muster nach der Herstellung auf das Substrat (10) aufgebracht wird.

14. System nach einem der Ansprüche 1 bis 13, in dem der Sensor (20) so gebildet ist, dass er während der Verwendung wie ein Stift gehalten werden kann und die erste Elektrodenvorrichtung (22) in Form einer Spitze bereitgestellt wird.

15. System nach einem der Ansprüche 1 bis 14, in dem die zweite Elektrodenvorrichtung (24) ein Gebilde auf der Außenseite des Sensors (20) umfasst, so dass sie während der Verwendung mit einem Benutzer in Kontakt ist, wobei der elektrische Kontakt (30) mit wenigstens einer der leitenden Flächen über den Benutzer hergestellt wird.

16. System nach einem der Ansprüche 1 bis 14, in dem die zweite Elektrodenvorrichtung (24) ein biegsames Kabel umfasst, das während der Verwendung in elektrischem Kontakt mit wenigstens einer der leitenden Flächen angeordnet oder befestigt sein kann.

17. System nach einem der Ansprüche 1 bis 16, in dem der Sensor (20) eine hörbare oder sichtbare Anzeigevorrichtung (26a) umfasst, die so angeordnet ist, dass sie unterschiedliche hörbare oder sichtbare Meldungen entsprechend der Abwesenheit oder der Anwesenheit der Leiterbahn (30) gibt.

18. System nach einem der Ansprüche 1 bis 13, in dem der Sensor (20) eine Auslesevorrichtung (40; 50) umfasst, durch die das Substrat durchgeführt wird.

19. System nach Anspruch 18, in dem die erste Elektrodenvorrichtung (22) so angeordnet ist, dass sie über die Oberfläche des Substrats (10) durchgeführt wird, wenn sie durch die Vorrichtung durchgeführt wird und die zweite Elektrode (24) den Kontakt mit wenigstens einer der leitenden Flächen herstellt.

20. System nach Anspruch 19, wobei die zweite Elektrodenvorrichtung (24) eine Bürste oder einen Teil einer Walze (42) umfasst, die einen Teil eines Transportmechanismus bildet, der dazu angeordnet ist, das Substrat (10) durch die Vorrichtung zu transportieren.

21. System nach einem der Ansprüche 1 bis 20, ferner umfassend eine Signalverarbeitungsvorrichtung, die in Verbindung mit dem Sensor (20) steht und dazu angeordnet ist, ein ausgegebenes Signal aus der Vorrichtung des elektrischen Stromkreises (25), das die erfassten Anwesenheiten und Abwesenheiten wiedergibt, zu empfangen.

22. System nach Anspruch 21, in dem die Verbindung in Form einer drahtlosen Verbindung erfolgt.

23. System nach Anspruch 22, in dem die drahtlose Verbindung wenigstens eine Verbindung über Infrarot, eine Verbindung über akustische Signalgebung oder eine Verbindung über elektromagnetische Wellen umfasst.

24. System nach Anspruch 21, 22 oder 23, in dem die Signalverarbeitungsvorrichtung ein Computer (70) mit einer Geräuschverarbeitungsvorrichtung (73) und einem damit verbundenem Audiosignalverbinddungsteil (74) ist, und in dem das ausgegebene Signal über den Audiosignalverbindungsteil in den Computer eingegeben wird.

25. System nach Anspruch 21, 22, 23 oder 24, in dem das Muster aus leitenden und isolierenden Flächen eine Position auf dem Substrat (10) wiedergibt und das ausgegebene Signal durch die Signalverarbeitungsvorrichtung verarbeitet wird, um die Position des Sensors (20) auf dem Substrat zu ermitteln.

26. System nach Anspruch 21, 22, 23 oder 24, in dem das Muster aus leitenden und isolierenden Flächen codierte Informationen wiedergibt und das ausgegebene Signal von der Signalverarbeitungsvorrichtung verarbeitet wird, um die codierten Informationen auszulesen.

27. System nach Anspruch 21, 22, 23 oder 24, in dem die Signalverarbeitungsvorrichtung ein Computer (70) ist, der so angeordnet ist, dass er bei Eingang unterschiedlicher Schlüssel in verschiedenen Betriebsarten arbeiten kann und in dem die Schlüssel in Form von Elementen (80), die aus dem Substrat bestehen, auf dem das isolierende Muster einen oder mehrere Schlüssel wiedergibt, die unter Verwendung des Sensors (20) in den Computer eingegeben werden können, von einem Benutzer erhalten werden können.

28. System nach einem der Ansprüche 21 bis 26, in dem die Signalverarbeitungsvorrichtung einen Computer (70) oder ein Funktelefon (60) umfasst.

## Revendications

1. Système d'informations comprenant un substrat (10) ayant une surface sur laquelle est disposé un motif de zones conductrices et isolantes, le système comprenant en outre un dispositif de détection (20), dans lequel
le dispositif de détection comprend des premiers moyens d'électrode (22) ayant une partie agencée de manière à être déplacée sur la surface du substrat, des seconds moyens d'électrode (24) agencés de manière à être disposés, en utilisation, en contact électrique avec au moins une des zones conductrices, et des moyens de circuit électrique (25) agencés de manière à détecter la présence ou l'absence d'un chemin conducteur (30) entre les premier et second moyens d'électrode,
le motif étant agencé de sorte que les absences et présences détectées dudit chemin conducteur, en réponse à un déplacement desdits premiers moyens d'électrode (22) sur la surface tandis qu'ils sont en contact avec le motif, correspondent audit motif et peuvent être lues en utilisation, par un dispositif de traitement de signal pour permettre que le dispositif de traitement de signal interprète le motif,
**caractérisé en ce que** le substrat (10) est une feuille de base avec une surface conductrice sur laquelle est disposé un motif isolant (12) pour former ledit motif de zones conductrices et isolantes, le motif isolant étant formé par un isolant qui est sensiblement invisible à l'oeil de l'utilisateur.

2. Système d'informations selon la revendication 1, dans lequel l'isolant est une encre qui est transparente ou d'une couleur correspondant à la couleur du substrat.

3. Système d'informations selon la revendication 1 ou 2, dans lequel le motif de zones conductrices et isolantes représente des informations codées qui sont interprétables, en utilisation, par un dispositif de traitement de signal.

4. Système selon la revendication 1, 2 ou 3, dans lequel ladite surface conductrice comprend un silicate synthétique conducteur et un liant.

5. Système selon l'une quelconque des revendications précédentes, dans lequel ledit motif isolant (12) est suffisamment non obstructif de manière à ne pas interférer visuellement avec une image visible (81, 82) disposée sous le motif isolant dudit substrat (10).

6. Système selon la revendication 5, dans lequel ledit motif isolant (12) est formé d'un vernis d'impression.

7. Système selon l'une quelconque des revendications précédentes dans lequel la feuille de base dudit substrat (10) est à base de papier ou de carton.

8. Système selon l'une quelconque des revendications 1 à 6 dans lequel la feuille de base dudit substrat (10) est un papier synthétique ou un polypropylène imprimable ou un autre matériau de feuille de matière plastique.

9. Système selon l'une quelconque des revendications précédentes dans lequel le substrat (10) est conducteur sur toute l'épaisseur de la feuille de base.

10. Système selon l'une quelconque des revendications précédentes dans lequel ladite surface conductrice est produite par une couche conductrice formée sur une feuille de base non conductrice.

11. Système selon l'une quelconque des revendications précédentes, dans lequel ledit substrat (10) est une carte à jouer.

12. Système selon l'une quelconque des revendications 1 à 11 dans lequel ledit motif isolant est formé durant la fabrication du substrat (10).

13. Système selon l'une quelconque des revendications 1 à 11 dans lequel ledit motif isolant est appliqué sur ledit substrat (10) après fabrication.

14. Système selon l'une quelconque des revendications 1 à 13 dans lequel ledit dispositif de détection (20) est formé de sorte qu'il peut être tenu, en utilisation, comme un stylo et lesdits premiers moyens d'électrode (22) sont disposés sous la forme d'une pointe.

15. Système selon l'une quelconque des revendications 1 à 14 dans lequel lesdits seconds moyens d'électrode (24) comprennent une formation sur l'extérieur du dispositif de détection (20) de manière à être en contact, en utilisation, avec un utilisateur, ledit contact électrique (30) avec au moins une des zones conductrices étant réalisé par l'intermédiaire de l'utilisateur.

16. Système selon une des revendications 1 à 14 dans lequel lesdits seconds moyens d'électrode (24) comprennent un câble flexible qui peut être placé ou fixé, en utilisation, en contact électrique avec au moins une desdites zones conductrices.

17. Système selon l'une quelconque des revendications 1 à 16 dans lequel ledit dispositif de détection (20) comprend un indicateur sonore ou visuel (26a) agencé pour donner différentes indications sonores ou visuelles suivant l'absence ou la présence dudit chemin conducteur (30).

18. Système selon l'une quelconque des revendications 1 à 13 dans lequel ledit dispositif de détection (20) comprend un dispositif de lecteur (40 ; 50) à travers lequel le substrat est passé.

19. Système selon la revendication 18 dans lequel lesdits premiers moyens d'électrode (22) sont agencés pour passer sur la surface du substrat (10) au fur et à mesure qu'il est passé à travers le dispositif et ladite seconde électrode (24) entre en contact avec au moins une desdites zones conductrices.

20. Système selon la revendication 19 dans lequel lesdits seconds moyens d'électrode (24) comprennent une brosse, ou une partie d'un rouleau (42) faisant partie d'un mécanisme de transport agencé pour transporter ledit substrat (10) à travers le dispositif.

21. Système selon l'une quelconque des revendications 1 à 20, comprenant en outre un dispositif de traitement de signal en communication avec ledit dispositif de détection (20) et agencé pour recevoir un signal de sortie depuis lesdits moyens de circuit électrique (25) représentatif desdites présences et absences détectées.

22. Système selon la revendication 21 dans lequel ladite communication est effectuée au moyen d'une liaison sans fil.

23. Système selon la revendication 22, dans lequel ladite liaison sans fil comprend au moins l'un d'une liaison infrarouge, une liaison de signalisation acoustique ou une liaison à onde électromagnétique.

24. Système selon la revendication 21, 22 ou 23, dans lequel ledit dispositif de traitement de signal est un ordinateur (70) ayant un dispositif de traitement audio (73) et une partie de connecteur de signal audio associé (74), et dans lequel ledit signal de sortie est entré dans ledit ordinateur par l'intermédiaire de ladite partie de connecteur de signal audio.

25. Système selon la revendication 21, 22, 23 ou 24, dans lequel ledit motif de zones conductrices et isolantes représente la position sur le substrat (10) et ledit signal de sortie est traité par ledit dispositif de traitement de signal pour déterminer la position du dispositif de détection (20) sur le substrat.

26. Système selon la revendication 21, 22, 23 ou 24, dans lequel ledit motif de zones conductrices et isolantes représente des informations codées et ledit signal de sortie est traité par ledit dispositif de traitement de signal pour lire lesdites informations codées.

27. Système selon la revendication 21, 22, 23 ou 24, dans lequel ledit dispositif de traitement de signal est un ordinateur (70) agencé pour fonctionner dans différents modes lors de l'entrée de différentes clés, et dans lequel lesdites clés peuvent être obtenues par un utilisateur sous la forme d'articles (80) constitués dudit substrat sur lequel ledit motif isolant représente une ou plusieurs desdites clés qui peuvent être entrées dans ledit ordinateur par utilisation dudit dispositif de détection (20).

28. Système selon l'une quelconque des revendications 21 à 26 dans lequel ledit dispositif de traitement de signal comprend un ordinateur (70) ou un téléphone cellulaire (60).
